# EUROPEAN PATENT APPLICATION

(11) **EP 3 766 654 A1**
(43) Date of publication of application: **20.01.2021**
(21) Application number: 20186220.8
(22) Date of filing: 16.07.2020
(51) Int. Cl.: B29C 45/27, B29C 45/78

(54) **INJECTION MOLDING APPARATUS**

(30) Priority: 18.07.2019 US 201962875687 P
(71) Applicant: Mold-Masters (2007) Limited, Georgetown, ON L7G 4X5 (CA)
(72) Inventor: Nguyen, James, Mississauga, Ontario L5M 6M5, (CA); Thayalan, Gnanasoundram Thai, Georgetown, Ontario L7G 0K6 (CA); Tam, Dannis, Oakville, Ontario L6H 4Y8 (CA); Kench, Stephen, Herefordshire, HR1 3EY (GB)
(74) Representative: Grünecker Patent- und Rechtsanwälte PartG mbB

(57) **Abstract**

An injection molding apparatus having a hot runner including a plurality of thermocouples and a plurality of heaters, a temperature controller remote from the hot runner, and a communication box attached to the hot runner. The communication box being configured to form a fieldbus, via a wireless communication link, with the temperature controller, and the communication box including a communication card connecting the thermocouples to the fieldbus.

## Description

### FIELD OF THE INVENTION

The invention relates generally to an injection molding apparatus and, in particular, an injection molding apparatus including a wireless communication link between the hot runner and the temperature controller.

### BACKGROUND OF THE INVENTION

In injection molding, a temperature controller controls the temperature of the hot runner by regulating the heaters in the hot runner to maintain the temperature of the hot runner at a predetermined temperature. The temperature controller measures the temperature of the hot runner via thermocouples in the hot runner. Connecting a thermocouple to the temperature controller requires two wires. In applications requiring many thermocouples, the number of wires spanning the space between the hot runner and the temperature controller can be cumbersome.

### BRIEF SUMMARY OF THE INVENTION

An aspect of the present application provides an injection molding apparatus comprising: a hot runner including a plurality of thermocouples and a plurality of heaters; a temperature controller remote from the hot runner; a communication box attached to the hot runner, the communication box configured to form a fieldbus, via a wireless communication link, with the temperature controller, the communication box including a communication card connecting the thermocouples to the fieldbus.

The fieldbus can be a Controller Area Network bus (CAN bus).

The communication card can connect 1 to 12 thermocouples to the CAN bus.

The communication box can include a plurality of communication cards daisy chained together.

The communication cards are slaves and the temperature controller can include a master card forming the fieldbus with the communication cards and the temperature controller can include a computer-on-modules (COM) board in communication with the master card.

The temperature controller can include another fieldbus and a plurality of temperature controlling cards daisy chained together, the temperature controlling cards can be slaves and the temperature controller can include another master card forming the another fieldbus with the temperature controlling cards, the COM board in communication with the another master card.

The another fieldbus can be a Controller Area Network bus (CAN bus).

The temperature controller can be configured to perform closed-loop control of a temperature of the hot runner.

The injection molding apparatus can include a human machine interface (HMI) interconnected with the COM board via a Universal Serial Bus (USB) connection.

### BRIEF DESCRIPTION OF THE DRAWINGS

The foregoing and other features and advantages of the invention will be apparent from the following description of embodiments thereof as illustrated in the accompanying drawings. The drawings are not to scale.
FIG. 1 is a schematic view of an injection molding apparatus in accordance with an embodiment of the present application.
FIG. 2 is a schematic view of a communication box and a temperature controller of the injection molding apparatus of FIG. 1.
FIG. 3 is a schematic view of the two fieldbuses of the injection molding apparatus of FIG. 1.

### DETAILED DESCRIPTION OF THE INVENTION

Specific embodiments of the present invention are now described with reference to the figures. The following detailed description is merely exemplary in nature and is not intended to limit the invention or the application and uses of the invention. Furthermore, there is no intention to be bound by any expressed or implied theory presented in the preceding technical field, background, brief summary or the following detailed description.

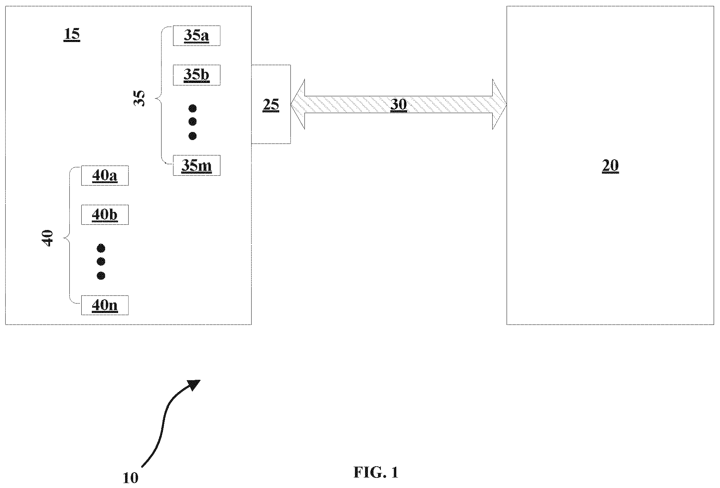

FIG. 1 is a schematic view of an injection molding apparatus according to an embodiment of the present application generally referred to as injection molding apparatus 10 comprising a hot runner 15, a temperature controller 20 remote from hot runner 15, a communication box 25 attached to hot runner 15, and a wireless communication link 30 interconnecting communication box 25 with temperature controller 20.

Hot runner 15 includes a plurality of thermocouples 35 (individually referred to as thermocouple 35a, 35b, ... 35m and collectively referred to as thermocouples 35) and a plurality of heaters 40 (individually referred to as heater 40a, 40b, ... 40n and collectively referred to as heaters 40).

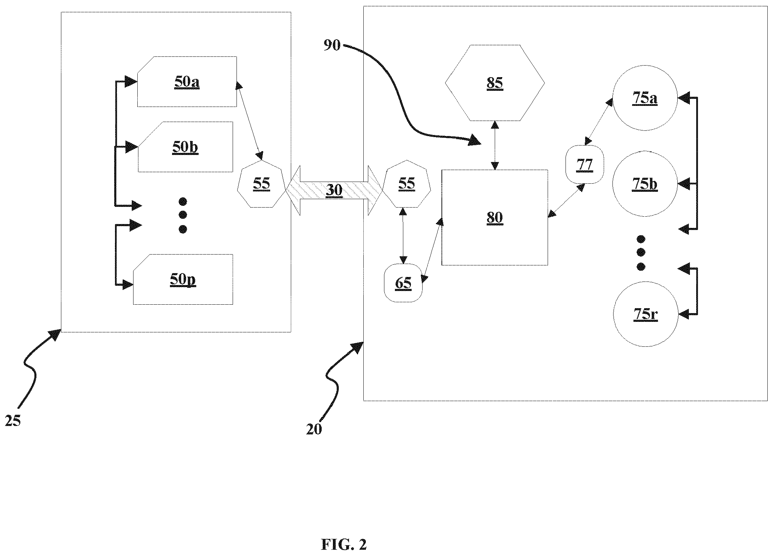

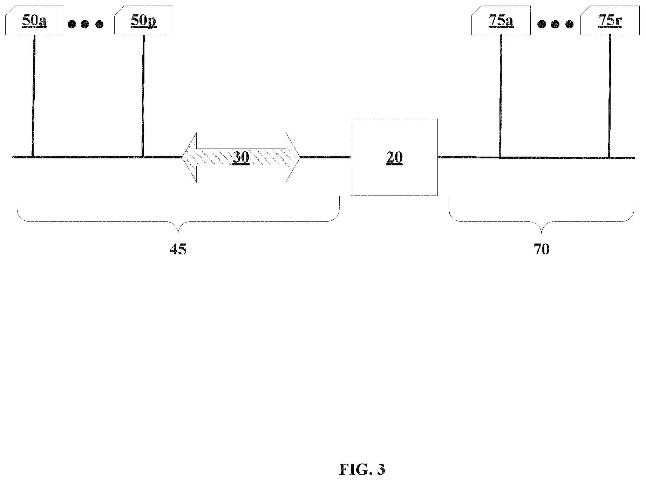

Referring to FIG. 2 and FIG. 3, communication box 25 is configured to form a fieldbus 45, via wireless communication link 30, with temperature controller 20. Communication box 25 includes a plurality of communication cards 50 (individually referred to as communication card 50a, 50b, 50p and collectively referred to as communication cards 50) connecting thermocouples 35 to fieldbus 45. (FIG. 2 is a schematic view of communication box 25 and temperature controller 20 of injection molding apparatus 10.) (FIG. 3 is a schematic view of the two fieldbuses 45, 70 of injection molding apparatus 10.)

In the illustrated embodiments, fieldbus 45 is a Controller Area Network bus (CAN bus). Communication box 25 and temperature controller 20 each include a respective wireless transceiver 55 to form wireless communication link 30. Communication box 25 includes a plurality of communication cards 50 daisy chained together.

Each communication card 50 includes a CAN controller (not shown) and in the illustrated embodiments, each communication card 50 can connect 1 to 12 thermocouples to fieldbus 45. Communication cards 50 are slaves and temperature controller 20 includes a master card 65 to form fieldbus 45 with communication cards 50. Temperature controller 20 includes a fieldbus 70 and a plurality of temperature controlling cards 75 (individually referred to as temperature controlling card 75a, 75b, ... 75r and collectively referred to as temperature controlling cards 75). Temperature controlling cards are daisy chained together. Temperature controlling cards 75 are slaves and temperature controller 20 includes a master card 77 to form fieldbus 70 with temperature controlling cards 75. Temperature controller 20 includes a computer-on-modules (COM) board 80. Master cards 65, 77 are in communication with COM Board 80. Fieldbus 70 connects temperature controlling cards 75 to COM board 80 while fieldbus 45 connects communication cards 50 to COM board 80. In the illustrated embodiments, fieldbus 70 is a CAN bus (see FIG. 3). Temperature controlling cards 75 controls (e.g., switching between on/off) the electric current powering heaters 40 to regulate the temperature of hot runner 15.

In the illustrated embodiments, temperature controller 20 includes a human machine interface (HMI) 85 connected to COM board 80 via a USB connection 90 (see FIG. 2). HMI 85 can be used to configure temperature controller 20.

Temperature controller 20 is configured to perform closed-loop control of a temperature of the hot runner using data from thermocouples 35. For example, temperature controller 20 can be programmed with a proportional-integral-derivative (PID) algorithm to control the sequence of powering (i.e., switching the electric current between on/off) heaters 40.

While various embodiments according to the present invention have been described above, it should be understood that they have been presented by way of illustration and example only, and not limitation. It will be apparent to persons skilled in the relevant art that various changes in form and detail can be made therein without departing from the scope of the invention. It will also be understood that each feature of each embodiment discussed herein, and of each reference cited herein, may be used in combination with the features of any other embodiment.

## Claims

1. An injection molding apparatus comprising:
a hot runner including a plurality of thermocouples and a plurality of heaters;
a temperature controller remote from the hot runner; and
a communication box attached to the hot runner, the communication box configured to form a fieldbus, via a wireless communication link, with the temperature controller, the communication box including a communication card connecting the thermocouples to the fieldbus.

2. The injection molding apparatus of claim 1, wherein the fieldbus is a Controller Area Network bus (CAN bus).

3. The injection molding apparatus of claim 2, wherein the communication card can connect 1 to 12 thermocouples to the CAN bus.

4. The injection molding apparatus of claim 3, wherein the communication box includes a plurality of communication cards daisy chained together.

5. The injection molding apparatus of claim 4, wherein the communication cards are slaves and the temperature controller includes a master card forming the fieldbus with the communication cards, the temperature controller includes a computer-on-modules (COM) board in communication with the master card.

6. The injection molding apparatus of claim 5, wherein the temperature controller includes another fieldbus and a plurality of temperature controlling cards daisy chained together, the temperature controlling cards are slaves and the temperature controller includes another master card forming the another fieldbus with the temperature controlling cards, the COM board in communication with the another master card.

7. The injection molding apparatus of claim 6, wherein the another fieldbus is a Controller Area Network bus (CAN bus).

8. The injection molding apparatus of claim 7, wherein the temperature controller is configured to perform closed-loop control of a temperature of the hot runner.

9. The injection molding apparatus of claim 8, further including a human machine interface (HMI) interconnected with the COM board via a Universal Serial Bus (USB) connection.
